(19) **Europäisches Patentamt / European Patent Office / Office européen des brevets**

(11) **EP 1 496 341 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**25.01.2017 Patentblatt 2017/04**

(51) Int Cl.:
**G01F 1/84** (2006.01)

(45) Hinweis auf die Patenterteilung:
**15.12.2010 Patentblatt 2010/50**

(21) Anmeldenummer: **04011845.7**

(22) Anmeldetag: **19.05.2004**

(54) **Coriolis-Massendurchflussmessgerät und Verfahren zum Betreiben eines Coriolis-Massendurchflussmessgeräts**

Coriolis mass flow meter and method for operating a Coriolis mass flow meter

Débitmètre massique de Coriolis et procédé de commande d'un débitmètre massique de Coriolis

(84) Benannte Vertragsstaaten:
**AT BE BG CH CY CZ DE DK EE ES FI FR GB GR HU IE IT LI LU MC NL PL PT RO SE SI SK TR**

(30) Priorität: **09.07.2003 DE 10331126**

(43) Veröffentlichungstag der Anmeldung:
**12.01.2005 Patentblatt 2005/02**

(73) Patentinhaber: **Krohne AG**
**4019 Basel (CH)**

(72) Erfinder: **Storm, Ralf**
**45131 Essen (DE)**

(74) Vertreter: **Gesthuysen Patent- und Rechtsanwälte Patentanwälte**
**Postfach 10 13 54**
**45013 Essen (DE)**

(56) Entgegenhaltungen:
**EP-A1- 0 919 793    EP-B1- 0 980 508**
**WO-A-99/17084    DE-A1- 19 634 663**
**US-A- 4 843 890**

EP 1 496 341 B2

Printed by Jouve, 75001 PARIS (FR)

**Beschreibung**

Die Erfindung betrifft ein Coriolis-Massendurchflußmeßgerät mit den Merkmalen des Oberbegriffs von Patentanspruch 1.

Die Erfindung betrifft ferner ein Verfahren zum Betreiben eines Coriolis-Massendurchflußmeßgeräts mit den Merkmalen des Oberbegriffs von Patentanspruch 5.

Aus der EP 0 980 508 B1 ist ein Coriolis-Massendurchflussmessgerät bekannt, bei dem der Kontrollsignalpfad Kontakt zum Messrohr aufweist und der Kontrollsignalpfad hinter dem Schwingungserzeuger des Anregungssignalpfads mit dem Anregungssignalpfad verbunden ist.

Aus der EP 0 919 793 A2 ist ein gattungsgemäßes Coriolis-Massedurchflußmeßgerät bekannt.

Durch das eingangs beschriebene Coriolis-Massendurchflußmeßgerät bzw. durch das eingangs beschriebene Verfahren zum Betreiben eines Coriolis-Massendurchflußmeßgeräts sind solche herkömmlichen Coriolis-Massendurchflußmeßgeräte bzw. Verfahren zum Betreiben dieser Coriolis-Massendurchflußmeßgeräte erfaßt, bei denen zur Anregung des Meßrohrs ein oder zwei Schwingungserzeuger vorgesehen sind und der Massendurchfluß auf der Grundlage einer mittels typischerweise zwei Schwingungssensoren erfaßten Phasendifferenz der Schwingungen des Meßrohrs an voneinander verschiedenen Stellen bestimmt wird. Dazu wird von der Ansteuereinrichtung ein Anregungssignal über den Anregungssignalpfadeinrichtungen, wie Digital/Analog-Wandler, und Signalkonditionierer, wie Verstärker, aufweisenden Anregungssignalpfad zu einem oder zwei Schwingungserzeugern geführt. Das Meßrohr wird in Schwingungen versetzt, und mittels typischerweise zwei Schwingungssensoren werden die Schwingungen des Meßrohrs erfaßt, wobei der Anregungsschwingung die von dem durch das Meßrohr strömenden Medium herrührende Coriolis-Schwingung überlagert ist, so daß im Ergebnis eine Massendurchflußmessung durchgeführt werden kann.

Zur eigentlichen Messung des Massendurchflusses werden die von den typischerweise zwei Schwingungssensoren erfaßten Meßsignale über den Meßsignalpfadeinrichtungen, wie Analog/Digital-Wandler und Signalkonditionierer, wie Verstärker, aufweisenden Meßsignalpfad zur Auswerteeinrichtung geführt, die körperlich mit der Ansteuereinrichtung identisch sein kann. Im Ergebnis ergibt sich damit folgender Signalverlauf: Das Anregungssignal läuft über den Anregungssignalpfad, zu dem im übrigen auch der Schwingungserzeuger gehört, zum Meßrohr. Durch die Interaktion mit dem Meßrohr, also durch Schwingungsanregung des Meßrohrs und Erfassung der sich ergebenden Schwingung, die unter anderem von der erzeugten Coriolis-Schwingung beeinflußt ist, wird das Anregungssignal zum Meßsignal. Das von den Schwingungssensoren erfaßte Meßsignal wird über den Meßsignalpfad, zu dem im übrigen auch die Schwingungserzeuger gehören, zur Auswerteeinrichtung geführt.

Bei Coriolis-Massendurchflußmeßgeräten mit genau einem Schwingungserzeuger ist zumindest eine möglichst phasengenaue Signalmessung erforderlich. Fehlerquellen, die die Genauigkeit der Phasenmessung verringern, liegen in der nichtkonstanten Auswirkung der Meßsignalpfadeinrichtungen auf das Meßsignal, beispielsweise durch die Abhängigkeit der Auswirkung der Meßsignalpfadeinrichtungen auf das Meßsignal in Abhängigkeit von der Temperatur. Das heißt, daß ein bei einer bestimmten Temperatur kalibriertes Coriolis-Massendurchflußmeßgerät bei von der Kalibriertemperatur abweichenden Betriebstemperaturen Fehler bei der Bestimmung der Phasendifferenz zwischen zwei Schwingungssensoren zeigt.

Bei Coriolis-Massendurchflußmeßgeräten mit zwei Schwingungserzeugern, mit denen unterschiedliche Schwingungsmodi des Meßrohrs angeregt werden sollen, ist die Situation noch komplizierter: Sowohl die Anregungssignale als auch das Meßsignal müssen möglichst amplituden- und phasengenau übertragen werden. Fehlerquellen, die die Amplitudengenauigkeit bzw. die Phasengenauigkeit negativ beeinflussen können, liegen damit sowohl in den Anregungssignalpfadeinrichtungen als auch in den Meßsignalpfadeinrichtungen.

Damit ist es die Aufgabe der vorliegenden Erfindung, ein Coriolis-Massendurchflußmeßgerät sowie ein Verfahren zum Betreiben eines solchen Coriolis-Massendurchflußmeßgeräts anzugeben, wobei eine möglichst hohe Meßgenauigkeit erzielt wird.

Ausgehend von dem eingangs beschriebenen Coriolis-Massendurchflußmeßgerät ist die zuvor hergeleitete und aufgezeigte Aufgabe mit den Merkmalen des Kennzeichnungsteils von Patentanspruch 1 gelöst.

Realisiert ist, daß der Kontrollsignalpfad den Anregungssignalpfad direkt mit der Auswerteeinrichtung verbindet und daß das wenigstens eine Anregungssignalpfadeinrichtung durchlaufene Anregungssignal als Kontrollsignal über den Kontrollsignalpfad zu der Auswerteeinrichtung geführt wird. Daß der Kontrollsignalpfad den Anregungssignalpfad direkt mit der Auswerteeinrichtung verbindet bedeutet dabei insbesondere, daß das Signal, das über den Kontrollsignalpfad zurück zur Auswerteeinrichtung geführt wird, keine Interaktion mit dem Meßrohr aufweist, so daß aufgrund der Tatsache, daß die im Kontrollsignalpfad vorgesehene Kontrollsignalpfadeinrichtung einer Meßsignalpfadeinrichtung entspricht, das Meßsignal mit Hilfe des Kontrollsignals korrigiert werden kann, um ein nichtkonstantes Verhalten der Anregungssignaleinrichtungen und der Meßsignaleinrichtungen in Abhängigkeit von äußeren Parametern, wie der Temperatur, zu kompensieren. Im Ergebnis wird damit eine verbesserte Meßgenauigkeit insbesondere betreffend die Amplitudengenauigkeit und die Phasengenauigkeit erzielt.

Gemäß einer bevorzugten Weiterbildung der Erfindung kommt insbesondere in Betracht, daß der Kontrollsignalpfad wenigstens einen Schwingungssensor, einen Verstärker oder/und einen Analog/Digital-Wandler aufweist, wenn ein entsprechender Schwingungssensor, Verstärker oder/und Analog/DigitalWandler im Meßsignalpfad vorgesehen ist. Gemäß einer bevorzugten Weiterbildung der Erfindung ist im übrigen für mehrere im Meßsignalpfad vorhandene Meßsignalpfadeinrichtungen jeweils eine entsprechende Kontrollsignalpfadeinrichtung vorgesehen. Daß eine Kontrollsignalpfadeinrichtung einer Meßsignalpfadeinrichtung entspricht, bedeutet dabei im Sinne der Erfindung, daß die Einrichtungen im wesentlichen gleich sind, es sich vorzugsweise also um gleiche Modelle und Typen handelt, die gleich verschaltet und gleich angeschlossen sind. Dabei ist schließlich gemäß einer bevorzugten Weiterbildung der Erfindung auch vorgesehen, daß sich alle im Meßsignalpfad vorgesehenen Meßsignalpfadeinrichtungen in entsprechender Weise als Kontrollsignalpfadeinrichtungen im Kontrollsignalpfad wiederfinden.

Erfindungsgemäß ist ferner vorgesehen, daß der Kontrollsignalpfad vor, vorzugsweise unmittelbar vor, dem Schwingungserzeuger mit dem Anregungssignalpfad verbunden ist und der Kontrollsignalpfad dabei vorzugsweise keinen Schwingungssensor aufweist. Der Aufbau des Kontrollsignalpfads wird damit vereinfacht, wobei die Auswirkungen des Schwingungserzeugers bzw. des Schwingungssensors auf das Anregungssignal entweder durch ein angenommenes konstantes Verhalten, vorzugsweise jedoch mit Hilfe eines von einem äußeren Parameter, wie der Temperatur, abhängigen Modells, berücksichtigt werden können.

Grundsätzlich kann das erfindungsgemäße Coriolis-Massendurchflußmeßgerät lediglich einen Schwingungserzeuger aufweisen. Gemäß der Erfindung ist jedoch vorgesehen, daß das Coriolis-Massendurchflußmeßgerät zwei Schwingungserzeuger mit je einem den jeweiligen Schwingungserzeuger mit der Ansteuereinrichtung verbindenden Anregungssignalpfad und ein mit den Anregungssignalpfaden sowie mit dem Kontrollsignalpfad verbundenen Multiplexer aufweist, wobei der Multiplexer den Kontrollsignalpfad abwechselnd für den einen oder den anderen Anregungssignalpfad aktiviert. Dabei wird auch davon gesprochen, daß der Anregungssignalpfad zweikanalig ausgelegt ist. Eine solche Vorgehensweise wird immer dann vorzuziehen sein, wenn die Zeitkonstanten der Störungen groß sind, so daß eine diskontinuierliche Erfassung der Störungen durch Aktivierung des Kontrollsignalpfads für den einen oder anderen Kanal des Anregungssignalpfads genügt. Ein mit dieser bevorzugten Weiterbildung der Erfindung verbundener Vorteil liegt darin, daß trotz dem Vorhandensein von zwei Schwingungserzeugern der Kontrollsignalpfad einkanalig ausgelegt werden kann, was den apparativen Aufwand vermindert.

Ausgehend von dem eingangs beschriebenen Verfahren zum Betreiben eines Coriolis-Massendurchflußmeßgeräts ist die weiter oben hergeleitete und aufgezeigte Aufgabe ferner gelöst mit den Merkmalen des Kennzeichnungsteils von Patentanspruch 5.

Auch hier bedeutet, daß die im Kontrollsignalpfad vorgesehene Kontrollsignalpfadeinrichtung einer Meßsignalpfadeinrichtung entspricht, daß Kontrollsignalpfadeinrichtung und Meßsignalpfadeinrichtung im wesentlichen gleich sind sowie gleich verschaltet und angeschlossen sind. Es ist vorgesehen, daß das von der Auswerteeinrichtung über den Meßsignalpfad erhaltene Meßsignal mit Hilfe des von der Auswerteeinrichtung über den Kontrollsignalpfad erhaltene Kontrollsignal korrigiert wird. Je weniger die Kontrollsignalpfadeinrichtung von der entsprechenden Meßsignalpfadeinrichtung abweicht, um so besser ist die Korrektur, so daß eine optimale Korrektur bei absoluter Gleichheit von Kontrollsignalpfadeinrichtung und Meßsignalpfadeinrichtung erzielt werden würde. Außerdem ist auch hier eine direkte Ankopplung des Kontrollsignalpfads an den Anregungssignalpfad ohne Interaktion mit dem Meßrohr vorgesehen.

Durch die Korrektur des über den Meßsignalpfad erhaltenen Meßsignals mit Hilfe des von der Auswerteeinrichtung über den Kontrollsignalpfad erhaltenen und durch die Schwingungsanregung des Meßrohrs nicht beeinflußten Kontrollsignals können somit nichtkonstante Verhalten der Anregungssignalpfadeinrichtungen und der Meßsignalpfadeinrichtungen berücksichtigt werden, so daß im Ergebnis aufgrund verbesserter Amplituden- und Phasengenauigkeit insgesamt eine höhere Meßgenauigkeit erzielt wird.

Grundsätzlich kann die Korrektur des von der Auswerteeinrichtung über den Meßsignalpfad erhaltenen Meßsignals mit Hilfe des von der Auswerteeinrichtung über den Kontrollsignalpfad erhaltenen Kontrollsignals ausreichend sein, insbesondere nämlich, wenn sich alle im Meßsignalpfad vorhandenen Meßsignalpfadeinrichtungen in entsprechender Weise als Kontrollsignalpfadeinrichtungen im Kontrollsignalpfad wiederfinden bzw. wenn nur für solche Meßsignalpfadeinrichtungen keine entsprechenden Kontrollsignalpfadeinrichtungen vorgesehen sind, die ein im wesentlichen konstantes Verhalten auch bei Änderungen äußerer Parameter, wie der Temperatur, erwarten lassen. Gemäß einer bevorzugten Weiterbildung der Erfindung ist jedoch vorgesehen, daß das Meßsignal außer mit Hilfe des von der Auswerteeinrichtung über den Kontrollsignalpfad erhaltenen Kontrollsignals mit Hilfe eines Modells korrigiert wird. Gemäß einer bevorzugten Weiterbildung der Erfindung ist dabei insbesondere vorgesehen, daß das Modell die theoretisch Auswirkung wenigstens einer von dem von der Auswerteeinrichtung über den Kontrollsignalpfad empfangenen Anregungssignal nicht durchlaufenen Anregungssignalspfadeinrichtung oder/und wenigstens einer solchen Meßsignalpfadeinrichtung, für die keine entsprechende Kontrollsignalpfadeinrichtung vorgesehen ist, auf das von der Auswerteeinrichtung über den Kontrollsignalpfad empfangene Kontrollsignal berücksichtigt.

Beispielsweise kann vorgesehen sein, daß der Kontrollsignalpfad vor dem Schwingungserzeuger mit dem Anregungssignalpfad verbunden ist und ferner keinen Schwingungssensor aufweist, wobei die Auswirkungen von Schwingungserzeuger und Schwingungssensor - z. B. in Abhängigkeit von der Temperatur - mit Hilfe einer die Temperaturabhängigkeit von Schwingungserzeuger bzw. Schwingungssensor beschreibenden Formel berücksichtigt wird.

Grundsätzlich ist das erfindungsgemäße Verfahren zum Betreiben eines Coriolis-Massendurchflußmeßgeräts für solche Coriolis-Massendurchflußmeßgeräte verwendbar, die lediglich einen Schwingungserzeuger aufweisen. Erfindungsgemäß sind jedoch zwei Schwingungserzeuger mit je einem den jeweiligen Schwingungserzeuger mit der Ansteuereinrichtung verbindenden Anregungssignalpfad und ein mit den Anregungssignalpfaden sowie mit dem Kontrollsignalpfad verbundener Multiplexer vorgesehen, wobei der Multiplexer den Kontrollsignalpfad abwechselnd für den einen oder den anderen Anregungssignalpfad aktiviert.

Im einzelnen gibt es nun eine Vielzahl von Möglichkeiten, das erfindungsgemäße Coriolis-Massendurchflußmeßgerät bzw. das erfindungsgemäße Verfahren zum Betreiben eines Coriolis-Massendurchflußmeßgeräts auszugestalten und weiterzubilden. Dazu wird auf die den unabhängigen Patentansprüchen nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt

Fig. 1 schematisch ein Coriolis-Massendurchflußmeßgerät mit Anregungssignalpfad, Meßsignalpfad und Kontrollsignalpfad gemäß einem ersten bevorzugten Ausführungsbeispiel der Erfindung,

Fig. 2 schematisch ein Coriolis-Massendurchflußmeßgerät mit Anregungssignalpfad, Meßsignalpfad und Kontrollsignalpfad gemäß einem zweiten bevorzugten Ausführungsbeispiel der Erfindung und

Fig. 3 schematisch ein für ein Coriolis-Massendurchflußmeßgerät mit zwei Schwingungserzeugern verwendbares Regelungsverfahren.

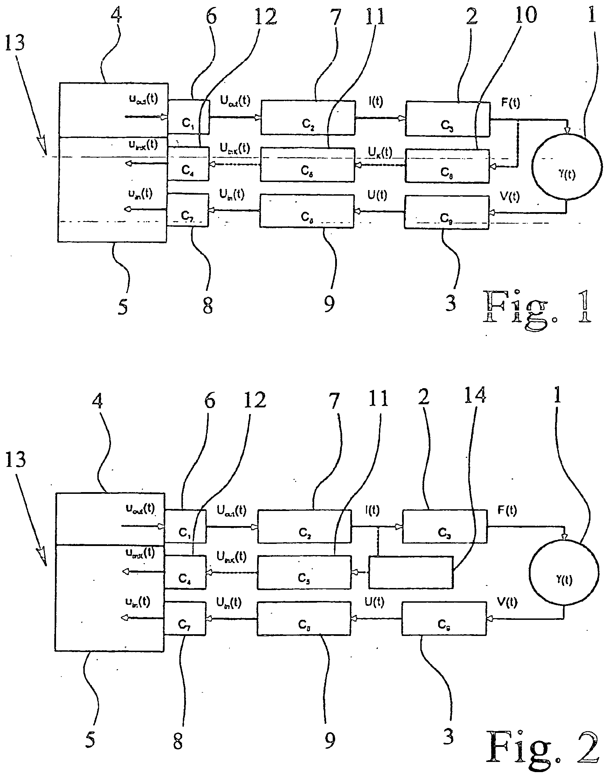

Aus Fig. 1 ist eine schematische Darstellung eines Coriolis-Massendurchflußmeßgeräts ersichtlich, das nicht erfindungesgemäß ausgestaltet ist. Das Coriolis-Massendurchflußmeßgerät weist ein Meßrohr 1 auf, das über einen zweikanaligen, in zwei Schwingungserzeugern 2 endenden Anregungssignalpfad zu Schwingungen angeregt wird. Die resultierenden Schwingungen des von einem Medium durchflossenen Meßrohrs 1 werden von zwei Schwingungssensoren 3 erfaßt.

Zur Ansteuerung der Schwingungserzeuger 2 über den Anregungssignalpfad dient eine Ansteuereinrichtung 4, und für die Auswertung der von den Schwingungssensoren 3 erfaßten Schwingungen des Meßrohrs 1 ist eine Auswerteeinrichtung 5 vorgesehen, wobei Ansteuereinrichtung 4 und Auswerteeinrichtung 5 körperlich als eine Einheit ausgebildet sind, nämlich als Ansteuer- und Auswerteeinrichtung 13. Der zweikanalig ausgelegte Anregungssignalpfad weist eine Mehrzahl von Anregungssignalpfadeinrichtungen auf, nämlich Digital/Analog-Wandler 6, Stromquellen 7 und die schon angesprochenen Schwingungserzeuger 2 zum Anregen des Meßrohrs 1. Der ebenfalls zweikanalig ausgelegte Meßsignalpfad weist eine Mehrzahl von Meßsignalpfadeinrichtungen auf, nämlich Analog/Digital-Wandler 8, Verstärker 9 und die schon angesprochenen Schwingungssensoren 3.

Ein Betrieb des dargestellten Coriolis-Massendurchflußmeßgeräts gemäß dem ersten bevorzugten Ausführungsbeispiel der Erfindung wäre grundsätzlich schon mit vorhandenem Anregungssignalpfad und Meßsignalpfad möglich: Das Meßrohr 1 kann über den Anregungssignalpfad zu Schwingungen angeregt werden, und über den Meßsignalpfad können die die Coriolis-Schwingungen enthaltenden Schwingungen des Meßrohrs 1 erfaßt und schließlich in der Auswerteeinrichtung 5 ausgewertet werden.

Bei dem vorliegend beschriebenen Ausführungsbeispiel, das nicht erfindungsgemäß ist, ist nun vorgesehen, daß zusätzlich zu dem Anregungssignalpfad und dem Meßsignalpfad ein mit dem Anregungssignalpfad direkt verbundener Kontrollsignalpfad vorgesehen ist, der ebenfalls zweikanalig ausgelegt ist, in Fig. 1 gestrichelt dargestellt. Der Kontrollsignalpfad weist als Kontrollsignalpfadeinrichtungen solche Einrichtungen auf, die gerade den Meßsignalpfadeinrichtungen des Meßsignalpfads entsprechen, nämlich den Schwingungssensoren 3 des Meßsignalpfads entsprechende Sensoren 10, den Verstärkern 9 des Meßsignalpfads entsprechende Verstärker 11 und den Analog/Digital-Wandlern 8 des Meßsignalpfads entsprechende Analog/Digital-Wandler 12.

Mit der zuvor beschriebenen Anordnung ist nun ein Korrekturverfahren, wie im folgenden beschrieben, möglich:

Das Meßrohr 1 weist ein Übertragungsverhalten auf, das durch die Funktion $\gamma(t)$ beschrieben werden kann. Die Funktion $\gamma(t)$ kann aus dem Quotienten

$$\gamma(t) = \frac{V(t)}{F(t)}$$

gewonnen werden, also aus dem Verhältnis des gemessenen Schwingungsverhaltens $V(t)$ des Meßrohrs 1 zu seiner Anregung *F(t)*. Dabei ist es grundsätzlich gleichgültig, ob eine Ausschlagmethode, bei der die Anregung *F(t)* konstant bleibt, eine Kompensationsmethode, bei der das gemessene Schwingungsverhalten *V(t)* des Meßrohrs 1 konstant bleibt, oder eine Mischform davon verwendet wird.

In der von der Ansteuereinrichtung 4 und der Auswerteeinrichtung 5 gemeinsam gebildeten Ansteuer- und Auswerteeinrichtung 13 sind nur die internen Signale $u_{out}(t)$ und $u_{in}(t)$ bekannt, also das ursprüngliche Anregungssignal bzw. das der Auswerteeinrichtung 5 über den Meßsignalpfad zugeführte Meßsignal. Mit diesen Signalen läßt sich schreiben

$$F(t) = C_1 \cdot C_2 \cdot C_3 \cdot u_{out}(t)$$

und

$$u_{in}(t) = C_7 \cdot C_8 \cdot C_9 \cdot V(t),$$

wobei die Faktoren $C_1$, $C_2$, $C_3$, $C_7$, $C_8$ und $C_9$, wie aus Fig. 1 ersichtlich, die Auswirkungen der Anregungssignalpfadeinrichtungen und der Meßsignalpfadeinrichtungen auf das Anregungssignal bzw. das Meßsignal darstellen. Diese im folgenden als Übertragungsfaktoren $C_i$ bezeichnete Faktoren sind jedoch im Betrieb des Coriolis-Massendurchflußmeßgeräts typischerweise nicht konstant, sondern unterliegen zeitlichen Änderungen, die zu Störungen führen können.

Faßt man die beiden realen Übertragungswege, also den Anregungssignalpfad und den Meßsignalpfad mit

$$C_{out}(t) = C_{outN} \cdot f(t) = C_1(t) \cdot C_2(t) \cdot C_3(t)$$

$$C_{in}(t) = C_{intN} \cdot h(t) = C_7(t) \cdot C_8(t) \cdot C_9(t)$$

zu

$$F(t) = C_{outN} \cdot f(t) \cdot u_{out}(t)$$

$$u_{in}(t) = C_{inN} \cdot h(t) \cdot V(t)$$

zusammen, so lassen sich die Übertragungswege in nominelle konstante Übertragungsfaktoren $C_{outN}$ und $C_{inN}$ sowie Störfunktionen *f(t)* und *h(t)* aufteilen. Die nominellen Übertragungsfaktoren ergeben sich aus der Kalibrierung des Coriolis-Massendurchflußmeßgeräts. Die Störfunktionen *f(t)* und *h(t)* können nun mit Hilfe des Kontrollsignalpfads bestimmt und eliminiert bzw. sehr klein gehalten werden.

Mit anderen Worten erfolgt mit Hilfe des Kontrollsignalpfads eine Überwachung des gesamten maßgeblichen Signalpfads, gegeben durch den Anregungssignalpfad und den Meßsignalpfad, wie im folgenden im Detail ausgeführt:

Der Kontrollsignalpfad setzt nach den Schwingungserzeugern 2 am Anregungssignalpfad an, so daß von den Schwingungssensoren 10 des Kontrollsignalpfads eine Messung der Anregung des Meßrohrs 1 gemessen wird. Damit ergibt sich für den Kontrollsignalpfad ein Eingangssignal $u_{inK}(t)$ von

$$u_{inK}(t) = C_4(t) \cdot C_5(t) \cdot C_6(t) \cdot F(t) = C_{inKN} \cdot g(t) \cdot F(t),$$

wobei die $C_i$ die realen Übertragungsfaktoren der Schwingungssensoren 10, der Verstärker 11 bzw. der Analog/Digital-Wandler 12 des Kontrollsignalpfads, $C_{inKN}$ ein nomineller Übertragungsfaktor und *g(t)* eine Störfunktion ist. Das Eingangssignal $u_{inK}$ kann nun zur Korrektur der Störfunktionen *f(t)* und *h(t)* dienen. Das zusätzliche Eingangssignal ergibt sich aus der Anregung zu

$$u_{inK}(t) = C_{inKN} \cdot g(t) \cdot F(t) = C_{inKN} \cdot g(t) \cdot C_{outN} \cdot f(t) \cdot u_{out}(t)$$

bzw. im nominellen Fall, also mit den Randbedingungen der Kalibrierung, zu

$$u_{inKN}(t) = C_{inKN} \cdot F(t) = C_{inKN} \cdot C_{outN} \cdot u_{out}(t).$$

Durch Einführung eines korrigierten Ansteuersignals

$$\tilde{u}_{out}(t) = u_{out}(t) \cdot \frac{u_{inKN}(t)}{u_{inK}(t)} = u_{out}(t) \cdot \frac{1}{f(t) \cdot g(t)}$$

erhält man eine Anregung des Meßrohrs 1 von

$$F(t) = C_{outN} \cdot f(t) \cdot \tilde{u}_{out}(t) = C_{outN} \cdot \frac{1}{g(t)} \cdot u_{out}(t)$$

unabhängig von der Störung des Antriebspfades $f(t)$. Die Störfunktion $g(t)$ in der Anregung hilft den Einfluß der Störfunktion $h(t)$ zu minimieren. Das eigentliche Interesse gilt der Übertragungsfunktion des Meßrohrs 1, also

$$\gamma(t) = \frac{V(t)}{F(t)} = \frac{\frac{1}{C_{inN}} \cdot \frac{1}{h(t)}}{C_{outN} \cdot \frac{1}{g(t)}} \cdot \frac{u_{in}(t)}{u_{out}(t)}.$$

Wenn der Kontrollsignalpfad weitestgehend identisch mit dem Meßsignalpfad ist, also die Kontrollsignalpfadeinrichtungen jeweils den Meßsignalpfadeinrichtungen entsprechen, so sind die Störfunktionen g(t) und $h(t)$ im wesentlichen identisch und die Bestimmung des Übertragungsverhaltens erfolgt praktisch fehlerfrei:

$$\gamma(t) = \frac{V(t)}{F(t)} = \frac{1}{C_{outN} \cdot C_{inN}} \cdot \frac{u_{in}(t)}{u_{out}(t)}.$$

Wenn Teile des Signalpfads, also wenigstens eine Anregungssignalpfadeinrichtung oder/und eine Meßsignalpfadeinrichtung, hinreichend gut über ein Modell beschreibbar sind, so können diese aus der Überwachung herausgenommen werden, was heißt, daß keine entsprechenden Kontrollsignalpfadeinrichtungen vorgesehen werden müssen. Auf diese Weise kann der Aufwand der Überwachung deutlich reduziert werden. Unabhängig davon kann ferner trotz zweikanaligem Anregungssignalpfad und zweikanaligem Meßsignalpfad ein einkanaliger Kontrollsignalpfad vorgesehen werden, der dann in einem Multiplex-Betrieb jeweils für einen Kanal aktiviert wird. Entsprechendes ist bei einem Coriolis-Massendurchflußmeßgerät gemäß einem erfindungsgemäßen Ausführungsbeispiel realisiert, wie im folgenden unter Bezugnahme auf Fig. 2 der Zeichnung im Detail beschrieben.

Da gemäß dem vorliegend beschriebenen bevorzugten Ausführungsbeispiel der Erfindung die Schwingungsanreger 2 sowie die Schwingungssensoren 3 über ein eigenes Modell beschrieben werden, setzt der Kontrollsignalpfad schon vor den Schwingungserzeugern 2 am Anregungssignalpfad an, und es ist kein Schwingungssensor im Kontrollsignalpfad vorgesehen. Da vorliegend der Kontrollsignalpfad nur einkanalig ausgelegt ist, sind nur ein einziger den Verstärkern 9 des Meßsignalpfads entsprechender Verstärker 11 und nur ein einziger den Analog/Digital-Wandlern 8 des Meßsignalpfads entsprechender Analog/Digital-Wandler 12 vorgesehen. Der einkanalige Kontrollsignalpfad wird mit Hilfe eines Multiplexers 14 zeitlich abwechselnd für jeweils einen Kanal des Anregungssignalpfads aktiviert.

Das Übertragungsverhalten der Schwingungserzeuger 2 kann bei der Verwendung von hochwertigen elektromagnetischen Treibern im für Coriolis-Massendurchflußmeßgeräte verwendeten Arbeitsbereich z. B. durch die Gleichung

$$C_3(t) = C_{3N} \cdot [1 + \alpha \cdot (T(t) - T_N)]$$

beschrieben werden, die das Temperaturverhalten der magnetischen Eigenschaften eines Dauermagneten darstellt, wobei die Temperatur $T(t)$ der Magnete aus der im Coriolis-Massendurchflußmeßgerät vorhandenen Messung der Meßstofftemperatur gewonnen wird und die Parameter $\alpha$ und $T_N$ durch eine Kalibrierung ermittelt werden. Analog dazu wird das Übertragungsverhalten der beiden Schwingungssensoren 3 über die Gleichung

$$C_9(t) = C_{9N} \cdot [1 + \beta \cdot (T(t) - T_N)]$$

beschrieben.

Der Kontrollsignalpfad überwacht dann nur noch die Digital/Analog- bzw. Analog/Digital-Wandler 6, 8 sowie die durch die Stromquellen 7 bzw. die Verstärker 9 gebildeten Signalkonditionierer. Dementsprechend ergibt sich dann für die Übertragungsfunktion des Meßrohrs

$$\gamma(t) = \frac{V(t)}{F(t)} = \frac{\frac{1}{C_{inN}} \cdot \frac{1}{h(t)}}{C_{outN} \cdot \frac{1}{g(t)}} \cdot \frac{1}{[1 + \alpha(T(t) - T_N)] \cdot [1 + \beta(T(t) - T_N)]} \cdot \frac{u_{in}(t)}{u_{out}(t)} \cdot$$

Dabei enthält die Störfunktion $g(t)$ nur noch die Änderungen der Übertragungsfaktoren $C_4$ und $C_5$, und die Störfunktion $h(t)$ enthält nur noch die Änderungen der Übertragungsfaktoren $C_7$ und $C_8$. Wie beim zuvor beschriebenen ersten bevorzugten Ausführungsbeispiel der Erfindung können auch hier wieder durch eine gleichartige Realisierung der relevanten Meßsignalpfadeinrichtungen bzw. Kontrollsignalpfadeinrichtungen die Zeitabhängigkeiten im Meßsignalpfad und im Kontrollsignal identisch gestaltet werden, also indem den überwachten Meßsignalpfadeinrichtungen entsprechende Kontrollsignalpfadeinrichtungen vorgesehen werden, so daß

$$g(t) = h(t)$$

gilt. Die Bestimmung des Übertragungsverhaltens des Meßrohrs 1 erfolgt dann praktisch fehlerfrei über

$$\gamma(t) = \frac{V(t)}{F(t)} = \frac{1}{C_{outN} \cdot C_{inN}} \cdot \frac{1}{[1 + \alpha(T(t) - T_N)] \cdot [1 + \beta(T(t) - T_N)]} \cdot \frac{u_{in}(t)}{u_{out}(t)} \cdot$$

Schließlich sei noch darauf hingewiesen, wie ein Coriolis-Massendurchflußmeßgerät mit zwei Schwingungserzeugern 2 optimal angeregelt werden kann:

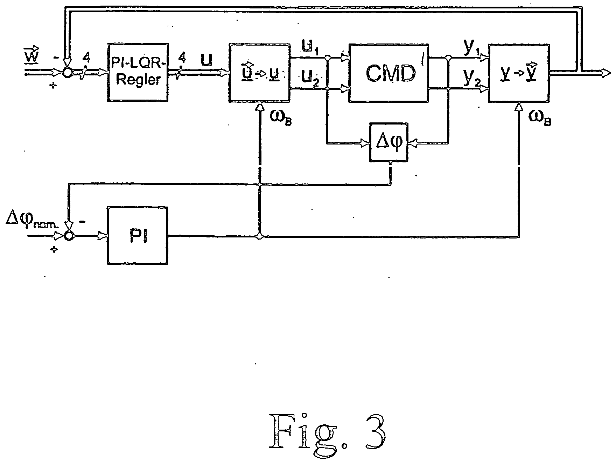

Zur Regelung des Schwingungsverhaltens der beiden Schwingungserzeuger 2 wird ein optimaler Zustandsregler (LQR) mit Zustandserweiterung um je einen I-Anteil für den Real- und den Imaginärteil der beiden Stellgrößen verwendet. Damit wird eine geringe Anfälligkeit gegenüber Änderungen äußerer Parameter, insbesondere des Massendurchflusses und der Betriebsfrequenz, erzielt. Zusätzlich zur phasengenauen Nachführung der Regelgrößen $y$ zur Sollgröße $w$ gelingt es in einer zusätzlichen Kaskadenanordnung, die Betriebsfrequenz $\omega_B$ durch einen einfachen PI-Regler derart einzustellen, daß zwischen der Eingangsgröße $u_1$ des ersten Modes des Meßrohrs 1 und der Ausgangsgröße $y_1$ des ersten Modes des Meßrohrs 1 eine Phasenbeziehung von 0 herrscht. Dadurch wird der Betrieb des Coriolis-Massendurchflußmeßgeräts in der Resonanzfrequenz des ersten Eigenmods $\omega_{01}$ sichergestellt. Aus Fig. 3 ist ein Blockschaltbild dieses Regelungskonzepts ersichtlich.

**Patentansprüche**

1.  Coriolis-Massendurchflußmeßgerät, mit wenigstens einem Meßrohr (1), wenigstens einem das Meßrohr (1) anregenden Schwingungserzeuger (2) und wenigstens einem Schwingungen des Meßrohr (1) erfassenden Schwingungssensor (3), wobei zur Ansteuerung des Schwingungserzeugers (2) eine Ansteuereinrichtung (4) vorgesehen ist, zur Auswertung der von dem Schwingungssensor (3) erfaßten Schwingungen wenigstens eine Auswerteeinrichtung (5) vorgesehen ist, zwischen der Ansteuereinrichtung (4) und dem Schwingungserzeuger (2) ein Anregungssignalpfad mit Anregungssignalpfadeinrichtungen zum Übertragen eines Anregungssignals vorgesehen ist und zwischen dem Schwingungssensor (3) und der Auswerteeinrichtung (5) ein Meßsignalpfad mit Meßsignalpfadeinrichtungen zum Übertragen des Meßsignals vorgesehen ist, und ein Kontrollsignalpfad mit wenigstens einer Kontrollsignalpfadeinrichtung vorgesehen ist, wobei der Kontrollsignalpfad den Anregungssignalpfad direkt mit der Auswerteeinrichtung (5) verbindet, so daß das Signal, das über den Kontrollsignalpfad zurück zur Auswerteeinrichtung geführt wird, keine Interaktion mit dem Messrohr aufweist, und so daß das wenigstens eine Anregungssignalpfadeinrichtung durchlaufene Anregungssignal als Kontrollsignal über den Kontrollsignalpfad zu der Auswerteeinrichtung (5) geführt wird, und wobei die im Kontrollsignalpfad vorgesehene Kontrollsignalpfadeinrichtung einer Meßsignalpfadeinrichtung entspricht und wobei der Kontrollsignalpfad vor dem Schwingungserzeuger (2) des Anregungssignalpfads mit dem Anregungssignalpfad verbunden ist, **dadurch gekennzeichnet, daß** zwei Schwingungserzeuger (2) mit je einem den jeweiligen Schwingungserzeuger (2) mit der Ansteuereinrichtung (4) verbindenden Anregungssignalpfad und ein mit den Anregungssignalpfaden sowie mit dem Kontrollsignalpfad verbundenen Multiplexer (14) vorgesehen sind, wobei der Multiplexer (14) den Kontrollsignalpfad abwechselnd für den einen oder den anderen Anregungssignalpfad aktiviert.

2.  Coriolis-Massendurchflußmeßgerät nach Anspruch 1, **dadurch gekennzeichnet, daß** der Kontrollsignalpfad wenigstens einen Schwingungssensor (10), einen Verstärker (11) oder/und einen Analog/Digital-Wandler (12) aufweist.

3.  Coriolis-Massendurchflußmeßgerät nach einem der Ansprüche 1 oder 2, **dadurch gekennzeichnet, daß** der Kontrollsignalpfad keinen Schwingungssensor aufweist.

4.  Verfahren zum Betreiben eines Coriolis-Massendurchflußmeßgeräts, wobei das Coriolis-Massendurchflußmeßgerät wenigstens ein Meßrohr (1), wenigstens einen das Meßrohr (1) anregenden Schwingungserzeuger (2) und wenigstens einen Schwingungen des Meßrohrs (1) erfassenden Schwingungssensor (3) aufweist, die Ansteuerung des Schwingungserzeugers (2) mittels einer Ansteuereinrichtung (4) erfolgt, die Auswertung der von dem Schwingungssensor (3) erfaßten Schwingungen durch eine Auswerteeinrichtung (5) erfolgt, ein Anregungssignal von der Ansteuereinrichtung (4) zu dem Schwingungserzeuger (2) über einen Anregungssignalpfad mit Anregungssignalpfadeinrichtungen übertragen wird und das Meßsignal von dem Schwingungssensor (3) zu der Auswerteeinrichtung (5) über einen Meßsignalpfad mit Meßsignalpfadeinrichtungen übertragen wird, und ein Kontrollsignalpfad mit wenigstens einer Kontrollsignalpfadeinrichtung vorgesehen ist, **wobei** der Kontrollsignalpfad den Anregungssignalpfad direkt mit der Auswerteeinrichtung (5) verbindet, so daß das Signal, das über den Kontrollsignalpfad zurück zur Auswerteeinrichtung geführt wird, keine Interaktion mit dem Messrohr aufweist, und so daß das wenigstens eine Anregungssignalpfadeinrichtung durchlaufene Anregungssignal als Kontrollsignal über den Kontrollsignalpfad zu der Auswerteeinrichtung (5) geführt wird, und wobei die im Kontrollsignalpfad vorgesehene Kontrollsignalpfadeinrichtung einer Meßsignalpfadeinrichtung entspricht, wobei der Kontrollsignalpfad vor dem Schwingungserzeuger (2) des Anregungssignalpfads mit dem Anregungssignalpfad verbunden wird und wobei das von der Auswerteeinrichtung (5) über den Meßsignalpfad erhaltene Meßsignal mit Hilfe des von der Auswerteeinrichtung (5) über den Kontrollsignalpfad erhaltenen Kontrollsignals korrigiert wird **dadurch gekennzeichnet, daß** zwei Schwingungserzeuger (2) mit je einem den jeweiligen Schwingungserzeuger (2) mit der Ansteuereinrichtung (4) verbindenden Anregungssignalpfad und ein mit den Anregungssignalpfaden sowie mit dem Kontrollsignalpfad verbundener Multiplexer (14) vorgesehen sind, wobei der Multiplexer (14) den Kontrollsignalpfad abwechselnd für den einen oder den anderen Anregungssignalpfad aktiviert.

5.  Verfahren nach Anspruch 4, **dadurch gekennzeichnet, daß** das Meßsignal zusätzlich mit Hilfe eines Modells korrigiert wird.

6.  Verfahren nach Anspruch 5, **dadurch gekennzeichnet, daß** das Modell die theoretische Auswirkung wenigstens einer von dem von der Auswerteeinrichtung (5) über den Kontrollsignalpfad empfangenen Anregungssignal nicht durchlaufenen Anregungssignalpfadeinrichtung oder/und wenigstens einer solchen Meßsignalpfadeinrichtung, für die keine entsprechende Kontrollsignalpfadeinrichtung vorgesehen ist, auf das von der Auswerteeinrichtung (5) über den Kontrollsignalpfad empfangene Kontrollsignal berücksichtigt.

7.  Verfahren nach Anspruch 5 oder 6, **dadurch gekennzeichnet, daß** das Modell die theoretische Auswirkung auf das Kontrollsignal in Abhängigkeit wenigstens eines äußeren Parameters, wie der Temperatur, berücksichtigt.

8.  Verfahren nach einem der Ansprüche 5 bis 7, **dadurch gekennzeichnet, daß** mit Hilfe des Modells die theoretische Auswirkung des Schwingungserzeugers (2) oder/und des Schwingungssensors (3) auf das Kontrollsignal berücksichtigt wird.

**Claims**

1. Coriolis mass flowmeter incorporating at least one measuring tube (1), at least one oscillator (2) for the excitation of the measuring tube (11) and at least one oscillation detector (3) for registering the oscillations of the measuring tube (1), with an activator (4) serving to energize the oscillator (2), at least one evaluation unit (5) serving to analyze the oscillations registered by the oscillation detector (3), an excitation signal path including excitation signal-path devices provided between the activator (4) and the oscillator (2) for transmitting an excitation signal, and a measuring signal path with measuring signal-path devices provided between the oscillation detector (3) and the evaluation unit (5) for transmitting the measuring signal, and a control signal path with at least one control signal path device is provided, wherein the control signal path connects the excitation signal path directly to the evaluation unit (5), so that the signal that is fed back to the evaluation unit via the control signal path has no interaction with the measuring tube and so that the excitation signal traveling through a minimum of one excitation signal path device is fed as a control signal via the control signal path to the evaluation unit (5), the control signal path device in the control signal path corresponding to a measuring signal path device, and wherein the control signal path connects to the excitation signal path ahead of the oscillator (2) of the excitation signal path, **characterized in that** two oscillators (2), each with an excitation signal path connecting the respective oscillator (2) with the activator (4), and with a multiplexer (14) that connects to the excitation signal paths and to the control signal path are provided, wherein the multiplexer (14) alternately activates the control signal path for one or the other excitation signal path.

2. Coriolis mass flowmeter according to claim 1, **characterized in that** the control signal path includes at least one oscillation detector (10), one amplifier (11) and/or one analog/digital converter (12).

3. Coriolis mass flowmeter according to claim 1 or 3, **characterized in that** the control signal path does not include an oscillation detector.

4. Method for operating a Coriolis mass flowmeter, wherein the Coriolis mass flowmeter has at least one measuring tube (1), at least one oscillator (2) for the excitation of the measuring tube (1) and at least one oscillation detector (3) for registering the oscillations of the measuring tube (1); energizing of the oscillator (2) being carried out by means of an activator (4), analyzing of the oscillations registered by the oscillation detector (3) being carried out by an evaluation unit (5), transmitting an excitation signal from the activator (4) to the oscillator (2) via an excitation signal path that includes excitation signal-path devices, and transmitting the measuring signal from the oscillation detector (3) to the evaluation unit (5) via a measuring signal path that includes measuring signal-path devices, and providing a control signal path with at least one control signal path device, wherein the control signal path connects the excitation signal path directly to the evaluation unit (5), so that the signal that is fed back to the evaluating unit via the control signal path has no interaction with the measuring tube, and so that the excitation signal traveling through at least one excitation signal path device is fed as a control signal via the control signal path to the evaluation unit (5), and wherein the control signal path device in the control signal path corresponds to a measuring signal path device, wherein the control signal path is connected to the excitation signal path ahead of the oscillator (2) of the excitation signal path and wherein the measuring signal received by the evaluation unit (5) via the measuring signal path is corrected with the aid of the control signal received by the evaluation unit (5) via the control signal path, **characterized in that** two oscillators (2), each with an excitation signal path connecting the respective oscillator (2) with the activator (4), and with a multiplexer (14) that connects to the excitation signal paths and to the control signal path are provided, wherein the multiplexer (14) alternately activates the control signal path for one or the other excitation signal path.

5. Method according to claim 4, **characterized in that** the measuring signal is additionally corrected with the aid of a model.

6. Method according to claim 5, **characterized in that** the model compensates for the theoretical effect on the control signal received by the evaluation unit via the control signal path, the theoretical effect being of at least one excitation signal path device which is bypassed by the excitation signal received by the evaluation unit via the control signal path, and/or of at least one of the measuring signal path devices for which no corresponding control signal path device has been provided.

**7.** Method according to claim 5 or 6, **characterized in that** the model compensates for the theoretical effect on the control signal as a function of at least one extraneous parameter such as the temperature.

**8.** Method according to any one of claims 5 to 7, **characterized in that**, with the aid of the model, the theoretical effect of the oscillator (2) and/or of the oscillation detector (3) on the control signal is compensated.

**Revendications**

**1.** Débitmètre massique de Coriolis, comprenant au moins un tube de mesure (1), au moins un générateur d'oscillations (2) qui excite le tube de mesure (1) et au moins un détecteur d'oscillations (3) qui détecte les oscillations du tube de mesure (1), un dispositif de commande (4) étant prévu pour commander le générateur d'oscillations (2), au moins un dispositif d'interprétation (5) étant prévu pour interpréter les oscillations détectées par le détecteur d'oscillations (3), un chemin de signal d'excitation comprenant des dispositifs de chemin de signal d'excitation étant prévu entre le dispositif de commande (4) et le générateur d'oscillations (2) pour la transmission d'un signal d'excitation et un chemin de signal de mesure comprenant des dispositifs de chemin de signal de mesure étant prévu entre le détecteur d'oscillations (3) et le dispositif d'interprétation (5) pour la transmission du signal de mesure, et un chemin de signal de contrôle comprenant au moins un dispositif de chemin de signal de contrôle (10, 11) étant prévu, le chemin de signal de contrôle reliant le chemin de signal d'excitation directement avec le dispositif d'interprétation (5) de sorte que le signal qui est reconduit par le biais du chemin de signal de contrôl jusqu'au dispositif d'interprétation (5) ne présentent aucun interaction avec le tube de mesure (1) et que le signal d'excitation qui traverse au moins un dispositif de chemin de signal d'excitation est acheminé en tant que signal de contrôle par le biais du chemin de signal de contrôle jusqu'au dispositif d'interprétation (5) et le dispositif de chemin de signal de contrôle prévu dans le chemin de signal de contrôle correspond à un dispositif de chemin de signal de mesure et le chemin de signal de contrôle est relié avec le chemin de signal d'excitation avant le générateur d'oscillations (2) du chemin de signal d'excitation, **caractérisé en ce que** deux générateurs d'oscillations (2) sont prévus, avec à chaque fois un chemin de signal d'excitation qui relie le générateur d'oscillations (2) correspondant avec le dispositif de commande (4) et un multiplexeur (14) relié avec les chemins de signal d'excitation ainsi qu'avec le chemin de signal de contrôle, le multiplexeur (14) activant le chemin de signal de contrôle en alternance pour l'un ou l'autre chemin de signal d'excitation.

**2.** Débitmètre massique de Coriolis selon la revendication 1, **caractérisé en ce que** le chemin de signal de contrôle présente au moins un détecteur d'oscillations (10), un amplificateur (11) et/ou un convertisseur analogique/numérique (12).

**3.** Débitmètre massique de Coriolis selon l'une des revendications 1 ou 2, **caractérisé en ce que** le chemin de signal de contrôle ne présente aucun détecteur d'oscillations.

**4.** Procédé de fonctionnement d'un débitmètre massique de Coriolis, le débitmètre massique de Coriolis présentant au moins un tube de mesure (1), au moins un générateur d'oscillations (2) qui excite le tube de mesure (1) et au moins un détecteur d'oscillations (3) qui détecte les oscillations du tube de mesure (1), la commande du générateur d'oscillations (2) s'effectuant au moyen d'un dispositif de commande (4), l'interprétation des oscillations détectées par le détecteur d'oscillations (3) s'effectuant par un dispositif d'interprétation (5), un signal d'excitation étant transmis du dispositif de commande (4) au générateur d'oscillations (2) par le biais d'un chemin de signal d'excitation comprenant des dispositifs de chemin de signal d'excitation et le signal de mesure étant transmis du détecteur d'oscillations (3) au dispositif d'interprétation (5) par le biais d'un chemin de signal de mesure comprenant des dispositifs de chemin de signal de mesure, et un chemin de signal de contrôle comprenant au moins un dispositif de chemin de signal de contrôle (10, 11) étant prévu, le chemin de signal de contrôle reliant le chemin de signal d'excitation directement avec le dispositif d'interprétation (5) de sorte que le signal qui est reconduit par le biais du chemin de signal de contrôl jusqu'au dispositif d'interprétation (5) ne présentent aucun interaction avec le tube de mesure (1) et que le signal d'excitation qui traverse au moins un dispositif de chemin de signal d'excitation est acheminé en tant que signal de contrôle par le biais du chemin de signal de contrôle jusqu'au dispositif d'interprétation (5) et le dispositif de chemin de signal de contrôle prévu dans le chemin de signal de contrôle correspond à un dispositif de chemin de signal de mesure, le chemin de signal de contrôle est relié avec le chemin de signal d'excitation avant le générateur d'oscillations (2) du chemin de signal d'excitation, **caractérisé en ce que** deux générateurs d'oscillations (2) sont prévus, avec à chaque fois un chemin de signal d'excitation qui relie le générateur d'oscillations (2) correspondant avec le dispositif de commande (4) et un multiplexeur (14) relié avec les chemins de signal d'excitation ainsi qu'avec le chemin de signal de contrôle, le multiplexeur (14) activant le chemin de signal de contrôle en alternance pour l'un ou l'autre chemin de signal d'excitation..

5. Procédé selon la revendication 4, **caractérisé en ce que** le signal de mesure est en plus corrigé à l'aide d'un modèle.

6. Procédé selon la revendication 5, **caractérisé en ce que** le modèle tient compte de l'effet théorique sur le signal de contrôle reçu par le dispositif d'interprétation (5) par le biais du chemin de signal de contrôle d'au moins un dispositif de chemin de signal d'excitation non traversé par le signal d'excitation reçu par le dispositif d'interprétation (5) par le biais du chemin de signal de contrôle et/ou d'au moins un dispositif de chemin de signal de mesure pour lequel il n'est pas prévu de dispositif de chemin de signal de contrôle correspondant.

7. Procédé selon la revendication 5 ou 6, **caractérisé en ce que** le modèle tient compte de l'effet théorique sur le signal de contrôle en fonction d'au moins un paramètre externe comme la température.

8. Procédé selon l'une des revendications 5 à 7, **caractérisé en ce que** l'effet théorique du générateur d'oscillations (2) et/ou du détecteur d'oscillations (3) sur le signal de contrôle est pris en compte à l'aide du modèle.

Fig. 1

Fig. 2

Fig. 3

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0980508 B1

- EP 0919793 A2